# EUROPÄISCHE PATENTSCHRIFT

(11) **EP 2 699 416 B1**
(45) Veröffentlichungstag und Bekanntmachung des Hinweises auf die Patenterteilung: **05.04.2017**
(21) Anmeldenummer: 11758366.6
(22) Anmeldetag: 14.07.2011
(51) Int. Cl.: B32B 21/02, B32B 21/12, B32B 27/08, B32B 27/10, B32B 29/04, E04F 15/02

(54) **FUSSBODENELEMENT**
FLOORING ELEMENT
ÉLÉMENT DE PLANCHER

(30) Priorität: 18.04.2011 DE 102011002131; 03.05.2011 DE 202011050027 U
(43) Veröffentlichungstag der Anmeldung: 26.02.2014
(73) Patentinhaber: Schulte, Guido, 59602 Rüthen-Meiste (DE)
(72) Erfinder: Schulte, Guido, 59602 Rüthen-Meiste (DE)
(74) Vertreter: Ksoll, Peter
(86) Internationale Anmeldenummer: PCT/DE2011/001461
(87) Internationale Veröffentlichungsnummer: WO 2012/142986

(56) Entgegenhaltungen:
- EP-A1- 1 262 607
- EP-A1- 2 263 867
- WO-A1-2005/100719
- WO-A1-2010/088769
- DE-U1-202011 050 027
- US-A1- 2006 216 471
- RICHARD P. WOOL: "Self-healing materials: a review", SOFT MATTER, Bd. 4, Nr. 3, 1. Januar 2008 (2008-01-01), Seite 400, XP55010293, ISSN: 1744-683X, DOI: 10.1039/b711716g
- WU D Y ET AL: "Self-healing polymeric materials: A review of recent developments", PROGRESS IN POLYMER SCIENCE, PERGAMON PRESS, OXFORD, GB, Bd. 33, Nr. 5, 1. Mai 2008 (2008-05-01), Seiten 479-522, XP022648873, ISSN: 0079-6700, DOI: 10.1016/J.PROGPOLYMSCI.2008.02.001 [gefunden am 2008-03-04]
- "On the road to improved scratch resistance", , 1. Dezember 2004 (2004-12-01), XP55010299, Gefunden im Internet: URL:http://www.bayercoatings.de/BMS/DB-RSC /BMS_RSC_CAS.nsf/files/pdf_Fahrzeug/$file/ On_the_road _to _improved _scratch _resistance_engl.pdf [gefunden am 2011-10-24]

## Beschreibung

Die Erfindung betrifft ein Fußbodenelement, welches eine Trägerplatte mit einer oberseitigen mehrlagigen Nutzbeschichtung aufweist.

Als Fußbodenbelag kommen vielfach Beläge in Form von Laminatpaneele zu Anwendung. Ein Laminat-Fußbodenelement besteht aus einer Trägerplatte aus Fasermaterial, in der Regel eine hoch- oder mittelverdichtete Faserplatte, auf deren Oberseite eine Nutzbeschichtung aufgebracht ist. Die Nutzbeschichtung umfasst üblicherweise eine Dekorschicht, beispielsweise ein beharztes Dekorpapier, sowie ein Overlay bzw. eine Versiegelung aus Lack, die dem Fußbodenelement eine hohe Oberflächenstrapazierfähigkeit verleiht. Auf der Unterseite der Trägerplatte kann ein Gegenzug aufgebracht sein. Dieser dient der Formstabilität und der Feuchtigkeitsabsperrung. Gegebenenfalls kann ferner auf der Unterseite eine Trittschallisolierung vorgesehen sein.

In der Regel besteht ein Laminatfußboden aus mehreren Reihen von in ihrer Konfiguration rechteckigen Fußbodenelementen. Auf einer Längsseite und einer Kopfseite besitzen die Fußbodenelemente üblicherweise durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Fußbodenelemente verlegt. Üblicherweise sind hierbei die Fußbodenelemente zweier benachbarter Reihen versetzt zueinander angeordnet.

Zur Verbindung der einzelnen Fußbodenelemente sind diese heute fast ausschließlich mit einem so genannten Klick-System versehen. Hierbei handelt es sich um mechanische Verriegelungsmittel an den Nuten und an den Federn, welche dabei in einem Fußbodenbelag benachbarten Fußbodenelemente miteinander in rastendem Eingriff gelangen. Hierdurch soll eine Fugenbildung im verlegten Fußbodenbelag durch Dehnungs- und Schrumpfungsvorgänge vermieden werden. Solche Fußbodenbeläge sind umfangreich im Stand der Technik beschrieben worden und beispielsweise durch die WO 98/58142 A1 sowie die WO 96/27721 A1 oder die JP 3-169967 bekannt.

Gängig ist, wie vorstehend bereits ausgeführt, ein Drei-Schicht-Aufbau der Fußbodenelemente mit profilierten Fügeflächen, wobei die Trägerplatte aus einer verdichteten Faserplatte besteht. Die Faserplatten sind für den Zweck sehr gut geeignet. Sie weisen die notwendige Stabilität auf, sind gut zu bearbeiten und kostengünstig.

Eine andere Form einer Fußbodenpaneele geht aus der EP 1 938 963 B1 hervor. Bei diesem Fußbodenelement besteht die Trägerplatte, dort als Kern bezeichnet, aus einem PVC. Auf der Oberseite der Trägerplatte ist eine Dekorfolie vorgesehen, die mit einem Dekor bedruckt ist. Auf die Dekorfolie wird eine transparente Verschleißschicht aufgebracht, die ebenfalls aus PVC besteht.

Durch die EP 1 762 400 A1 zählt ein Fußbodenelement, insbesondere aus Holzwerkstoff, Kunststoff oder einem Gemisch aus Holzwerkstoff und Kunststoff zum Stand der Technik, bei der zumindest auf die Oberseite eine Polyurethanschicht aufgebracht ist. Auf die Polyurethanschicht ist eine einen natürlichen Werkstoff imitierende Dekorschicht aufgebracht. Die Dekorschicht kann wiederum mit einer versiegelnden Polyurethanschicht versehen sein, die eine Strukturprägung aufweist.

Die DE 103 16 886 B4 beschreibt einen elastischen Bodenbelag aus thermoplastischen Kunststoff-Materialien mit einer dekorativen Deckschicht aus duroplastischem Material, die mit einem Kern aus thermoplastischem Kunststoff zu einer Einheit verbunden ist.

Aus der EP 2 263 867 A1 ist ein Fußbodenelement in Form eines Laminatbodenpaneels bekannt mit einer Trägerplatte, einem unterseitigen Gegenzug und einer auf die Trägerplatte aufgebrachten ein- oder mehrlagigen oberen Nutzbeschichtung. Die obere Nutzbeschichtung soll an ihrer außenseitigen Oberseite eine Folienschicht aus einem elastischen Kunststoff aufweisen. Bevorzugt ist hier der Einsatz von Polypropylen (PP), Polyethylen (PE), Polyurethan (PUR) und/oder Polyvinylchlorid (PVC).

Die DE 41 07 150 C2 beschreibt eine mehrschichtige Fußbodenbelagfolie auf der Basis mindestens eines Polyolefins oder einer polyolefinhaltigen Schicht bestehend aus mindestens drei Schichten oder Folien.

Eine Fußbodenplatte und ein Verfahren zu deren Herstellung ist ferner aus der EP 1 262 607 A1 bekannt. Die Fußbodenplatte in der Form eines Laminats besteht aus einer Trägerplatte aus Holz oder einem Holzwerkstoff, insbesondere MDF oder HDF, oder anderen nachwachsenden Rohstoffen und einem auf die Trägerplatte aufkaschierten Sandwich aus einer Dekorschicht und einer oberen Verschleißschicht. Auf die der Trägerplatte zugewandte Rückseite der Dekorschicht ist eine Polyurethan-Schicht aufgebracht.

Weiterhin beschreibt die WO 2010/088769 A1 ein schalldämpfendes Laminatmaterial mit einem mehrschichtigen Aufbau. Eine oder mehrere Schichten sind mit einem elastomeren Material, beispielsweise Polyethylen, Polyurethan oder Polypropylen, behandelt.

Auch die WO 2005/100719 A1 offenbart eine Fußbodenpaneele mit einem mehrschichtigen, geräuschgedämmten Aufbau.

Das in der US 2006/0216471 A1 offenbarte Laminat besitzt eine Trägerplatte und eine oder mehrere schalldämmende Schichten, die mit der Trägerplatte verbunden sind. Die Beschichtung weist eine Gesamtdicke von mindestens 5 mm auf und besitzt eine Glasübergangstemperatur um 0 °C kombiniert mit einer Kristallinität von etwa 39 Gew.-% und umfasst zumindest 40 Gew.-% elastisches Polymer.

Ausgehend vom Stand der Technik liegt der Erfindung die Aufgabe zugrunde, ein anwendungstechnisch verbessertes Fußbodenelement zu schaffen mit vorteilhaften Nutzungseigenschaften und insbesondere hoher Elastizität.

Die Lösung dieser Aufgabe besteht nach der Erfindung in einem Fußbodenelement gemäß den Merkmalen von Anspruch 1.

Vorteilhafte Ausgestaltungen und Weiterbildungen des erfindungsgemäßen Fußbodenelements sind Gegenstand der abhängigen Ansprüche 2 bis 13.

Das Fußbodenelement weist eine Trägerplatte mit einer oberseitigen mehrlagigen Nutzbeschichtung auf. Die Nutzbeschichtung umfasst zumindest eine Dämpfungsschicht, eine Dekorschicht sowie eine Verschleißschicht, wobei die Verschleißschicht aus einem thermoplastischen Kunststoff auf Basis von Polyethylenterephthalat (PET) und/oder Polypropylen (PP) besteht. Die Kombination der Dekorschicht und der Verschleißschicht aus einem thermoplastischen Kunststoff und der darunter angeordneten Dämpfungsschicht verleihen dem erfindungsgemäßen Fußbodenelement sehr gute anwendungstechnische und gebrauchs- bzw. nutzungstechnische Eigenschaften, insbesondere eine hohe Elastizität. Dies ist vorteilhaft im Zusammenwirken mit einer relativ starren bzw. steifen Trägerplatte, die die Basis des Fußbodenelements bildet.

Die Dekorschicht ist eine bedruckte Folie aus einem thermoplastischen Kunststoff auf Basis von Polyethylenterephthalat (PET) oder Polypropylen (PP). Die Folie ist von 1 µm bis 800 µm dick. Das Dekor ist insbesondere drucktechnisch aufgetragen, vorzugsweise in einem Digitaldruck.

Sowohl Polyethylenterephthalat (PET) als auch Polypropylen (PP) haben anwendungstechnisch vorteilhafte Eigenschaften hinsichtlich der geforderten Stabilität bei hoher Elastizität und eine sehr gute Festigkeit. Beide Werkstoffe sind gewerbehygienisch unbedenklich und schadstofffrei bzw. umweltunbedenklich. Die Werkstoffe können amorph verarbeitet werden und sind in dieser Form farblos und von hoher Lichtdurchlässigkeit. Die Eigenschaften werden entsprechend des Einsatzes als Dekorschicht bzw. Verschleißschicht eingestellt.

Die Dekorschicht kann auf die Unterseite bzw. Rückseite der Verschleißschicht aufgetragen sein. Dieses doppellagige Laminat wird dann auf die mit der Dämpfungsschicht versehene Trägerplatte aufgebracht.

Ein wesentlicher Aspekt der Erfindung besteht darin, dass die Dekorschicht direkt auf die Dämpfungsschicht gedruckt ist bzw. wird. Vorzugsweise erfolgt das Drucken der Dekorschicht mittels Digitaldruck. Vorzugsweise kommt hierzu ein elektrofotografisches Drucksystem zum Einsatz, bevorzugt ein Tintenstrahldruck.

Unterseitig der Trägerplatte des erfindungsgemäßen Fußbodenelements ist ein Gegenzug vorgesehen. Dieser dient ebenfalls der Formstabilität und der Feuchtigkeitsabsperrung. Vorzugsweise weist der Gegenzug eine Dicke von 0,4 mm bis 3,0 mm auf, insbesondere von 0,6 mm bis 2,5 mm. Der Gegenzug besteht aus einem Werkstoff mit einer Dichte von größer oder gleich (≥) 250 kg/m³.

Die Dämpfungsschicht besteht vorzugsweise aus einem Naturmaterial, insbesondere aus einem hochverdichtetem Granulatwerkstoff. Besonders bevorzugt besteht die Dämpfungsschicht aus Kork. Möglich ist aber auch eine Dämpfungsschicht aus einem Vlieswerkstoff aus vorzugsweise Naturfasern, insbesondere aus Flachsfasern oder aus Hanffasern.

Die Dämpfungsschicht besitzt insbesondere eine Dicke von 0,8 mm bis 3,5 mm, vorzugsweie von 1,0 mm bis 3,0 mm. Die Dämpfungsschicht, insbesondere eine Dämpfungsschicht aus hochverdichtetem Korkmaterial weist eine hohe Widerstandskraft gegen Eindrücke auf. Eine hohe Dichte von größer oder gleich (≥) 400 kg/m³ verleiht dem Fußbodenelement eine hohe Dimensionsstabilität.

Insbesondere vorteilhaft wird im Rahmen der Erfindung angesehen, dass Dämpfungsschicht und der Gegenzug aus dem gleichen Werkstoff bestehen, also beispielsweise aus einem Korkwerkstoff.

Oberhalb auf die Verschleißschicht, also tritt- bzw. sichtseitig, ist eine Versiegelung aufgetragen. Diese besteht vorzugsweise aus einer Lackierung, insbesondere aus einem Lack auf Polyurethan (PUR)-Basis. Insbesondere ist die Versiegelung in einer mittleren bzw. durchschnittlichen Schichtdicke von 2,0 µm bis 12,0 µm aufgetragen, bevorzugt ist die Versiegelung 5,0 µm bis 10,0 µm dick. Die Versiegelung ist vorteilhaft für die Haptik der Oberfläche des Fußbodenelements und verleiht dem Fußbodenelement einen gewünschten Glanzgrad. Auch partielle Matt/Glanz-Effekte oder auf das Dekorbild abgestimmte Matt/Glanz-Abstufungen können durch die Versiegelung erreicht werden.

Im Rahmen der Erfindung kommt als Trägerplatte eine verdichtete, insbesondere hochverdichtete Faserplatte (HDF) zur Anwendung. Die Trägerplatte besitzt vorzugsweise eine Dicke von 5 mm bis 8 mm. Das Material der Trägerplatte ist imprägniert und quellarm.

Zur Verlegung der Fußbodenelemente sind diese randseitig, also an den Längsseiten und/oder an den Kopfseiten, profiliert und mit Koppelmitteln versehen. Die Koppelmittel gelangen bei in einem Fußbodenbelag benachbarten Fußbodenelementen in Eingriff. Gängig sind Koppelmittel in Form von Nut und Feder sowie Klick-Systeme, bei denen die Koppelmittel miteinander in rastendem Eingriff gelangen. Zur Verrastung weisen die Koppelmittel leistenartige Vorsprünge und Rastnuten auf.

Die Sichtseite der Fußbodenelemente ist mit einer geprägten Oberflächenstruktur versehen. Vorzugsweise handelt es sich um tiefe, geprägte Strukturen mit einer Tiefe von größer oder gleich (≥) 60 µm, insbesondere größer oder gleich (≥) 80 µm. Besonders vorteilhaft ist das optische Erscheinungsbild eines Fußbodenelements, wenn die Oberflächenstruktur synchron auf das Dekorbild der Dekorschicht, insbesondere ein Druckdekorbild, abgestimmt ist. Insbesondere Oberflächenstruktur und unterschiedliche Glanzgradausprägungen ergeben sehr realistische Oberflächen. Die Oberflächenstrukturen werden insbesondere über Hitze und Druck in die Nutzbeschichtung eingeprägt. Vorzugsweise erfolgt dies, bevor die Einheit bestehend aus Dekorschicht, Verschleißschicht und Versiegelung auf die Dämpfungsschicht aufgeleimt wird. Auch das Package bzw. die Einheit aus Dämpfungsschicht, Dekorschicht, Verschleißschicht und Versiegelung kann mit einer Oberflächenstruktur versehen werden und anschließend auf die Trägerplatte aufgeleimt werden. Grundsätzlich kann die Oberflächenstruktur aber auch eingeprägt werden, nachdem der Schichtaufbau insgesamt auf der Trägerplatte aufgeleimt ist.

Die Verschleißschicht und die Dekorschicht sind vorzugsweise zu einer Einheit bzw. einem Sandwich verklebt, und zwar bevor die Einheit auf die Trägerplatte bzw. die darauf aufgebrachte Dämpfungsschicht aufgebracht wird. Die Versiegelung kann ebenfalls vorher aufgetragen werden. Zur Verbesserung der Haftung sind die Verschleißschicht und/oder die Dekorschicht unterseitig mit einer Haftfläche versehen. Die Haftfläche dient als Haftvermittler für die Verklebung der Schichten innerhalb des Mehrschichtaufbaus.

Insbesondere wird die Haftfläche durch eine Coronabehandlung oder eine Plasmabehandlung erzeugt. Bei dieser Behandlung wird die zu behandelnde Oberfläche für eine kurze Zeit einer elektrischen Coronaentladung ausgesetzt oder mittels plasmaaktiver Stoffe behandelt, um die Haftung mit den übrigen Schichten zu verbessern bzw. zu ermöglichen.

Der thermoplastische Kunststoff auf Basis von Polyethylenterephthalat (PET) und/oder Polypropylen (PP) kann mit Zuschlagsstoffen, insbesondere mit mineralischen Füllstoffen, wie zum Beispiel Talkum, Kreide oder Glasfasern, versehen sein. Hierdurch wird das Spektrum der mechanischen Eigenschaften (Steifigkeit, Elastizität, Festigkeit, Feuerfestigkeit etc.) deutlich erweitert.

Das erfindungsgemäße Fußbodenelement ist vorzugsweise allseitig an den Längskanten und an den Kopfkanten mit einer Fase versehen. Hierbei ist die Fase vorzugsweise nur im Bereich des oberen Schichtaufbaus der Nutzbeschichtung vorgesehen. Folglich ist die Fase im Bereich der Dekorschicht und/oder der Verschleißschicht und/oder der Versiegelung ausgebildet. Diese Maßnahme trägt dazu bei, dass die Fußbodenelemente auch im Fugenbereich zwischen in einem Fußbodenbelag benachbart verlegten Fußbodenelemente eine das Gesamtbild des Bodenbelags verbessernde Optik aufweisen.

Ein wesentlicher Vorteil des erfindungsgemäßen Fußbodenelements ist auch, dass dieses PVC- und weichmacherfrei ist.

Die Erfindung ist nachfolgend anhand von in den Zeichnungen dargestellten Ausführungsbeispielen näher beschrieben. Es zeigen:
- Figur 1: einen Querschnitt durch das nutseitige Ende und das federseitige Ende eines Fußbodenelements und
- Figur 2: eine Querschnittsdarstellung entsprechend der Figur 1, bei der das Fußbodenelement eine geprägte Oberflächenstruktur aufweist.

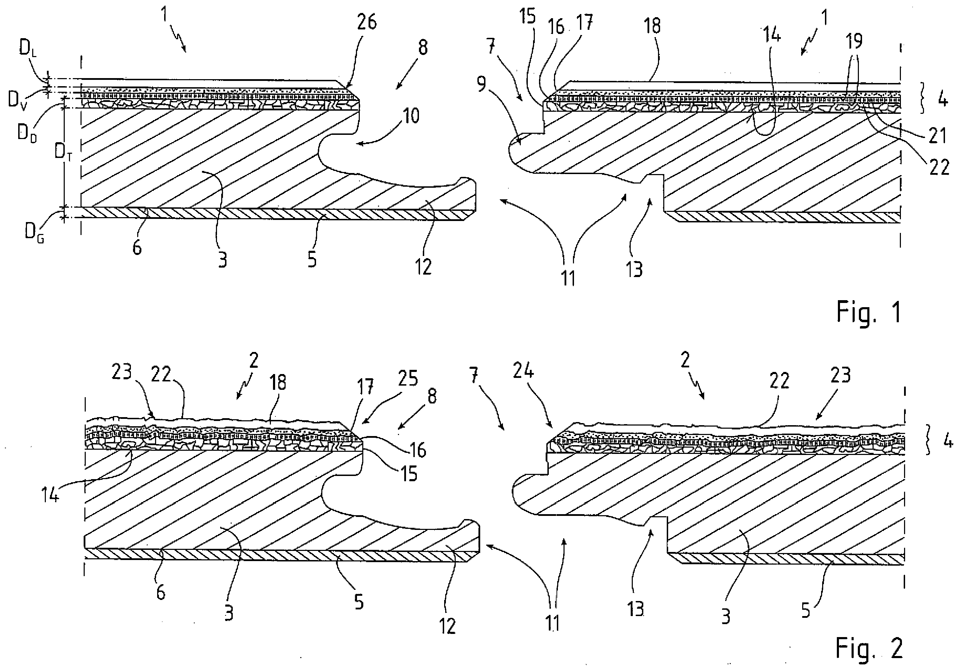

Ein erfindungsgemäßes Fußbodenelement ist in der Figur 1 mit 1 und in der Figur 2 mit 2 bezeichnet. Die Figuren 1 und 2 sind technisch schematisiert und nicht maßstäblich zu verstehen.

Das paneelartige Fußbodenelement 1, 2 ist üblicherweise rechteckig konfiguriert und weist eine Trägerplatte 3 aus einer hochdichten Faserplatte (HDF) mit einer oberseitigen mehrlagigen Nutzbeschichtung 4 auf. Unterseitig der Trägerplatte 3 ist ein Gegenzug 5 vorgesehen, der mit der Unterseite 6 der Trägerplatte 3 vollflächig verleimt ist. Der Gegenzug 5 unterstützt die Formstabilität des Fußbodenelements 1, 2 und dient zur Feuchtigkeitsabsperrung sowie Trittschallisolierung.

Die Trägerplatte 3 bzw. der hochverdichtete Faserwerkstoff der Trägerplatte 3 ist imprägniert und hierdurch wasserwabweisend und quellarm. Die Dicke D_{T} der Trägerplatte beträgt 5,0 mm bis 8,0 mm.

Das Fußbodenelement 1, 2 weist an einer Längsseite 7 und an einer hier nicht dargestellten Kopfseite jeweils eine Feder 9 und an der anderen Längsseite 8 und an der anderen ebenfalls nicht dargestellten Kopfseite eine an den Querschnitt der Feder 9 angepasste Nut 10 auf. Man erkennt, dass die Feder 9 und die Nut 10 in bzw. an der Trägerplatte 3 vorgesehen sind. In den Nuten 10 und an den Federn 9 sind Koppelmittel 11 ausgebildet, welche bei in einem Fußbodenbelag benachbarten Fußbodenelementen 1, 2 miteinander in rastendem Eingriff gelangen. Die Koppelmittel 11 umfassen den Nuten 10 vorgelagerte, begrenzt federnde Rastzunge 12, die mit Rastnuten 13 unterhalb der Federn 9 gefügt werden können. Über die Federn 9 und Nuten 10 können die Fußbodenelemente 1, 2 sowohl über ihre Längsseiten 7, 8 als auch über die Kopfseiten spaltfrei und leimlos zug- und druckfest gefügt werden.

Die Nutzbeschichtung 4 umfasst eine auf die Oberseite 14 der Trägerplatte 3 aufgeklebte Dämpfungsschicht 15 auf. Die Dämpfungsschicht 15 besteht aus einem hochverdichteten Granulatwerkstoff, vorzugsweise aus Kork. Der Werkstoff der Dämpfungsschicht 15 besitzt eine Dichte von größer oder gleich (≥) 400 kg/m³, wobei die Dämpfungsschicht 15 eine Dicke D_{D} von 0,80 mm bis 3,5 mm, insbesondere von 1,0 mm bis 3,0 mm besitzt.

Der Gegenzug 5 besteht aus einem Werkstoff mit einer Dichte von größer oder gleich (≥) 200 kg/m³ und weist eine Dicke D_{G} von 0,4 mm bis 3,0 mm, insbesondere von 0,6 mm bis 2,5 mm auf. Vorteilhafter Weise besteht auch der Gegenzug 5 aus einem hochverdichteten Granulatwerkstoff, insbesondere aus Kork. Besonders zweckmäßig bestehen die Dämpfungsschicht 15 und der Gegenzug 5 aus gleichartigen Werkstoffen.

Oberseitig auf die Dämpfungsschicht 15 ist eine Dekorschicht 16 und eine Verschleißschicht 17 aufgebracht. Bei der Dekorschicht 16 handelt es sich um eine mit einem Dekor bedruckte Folie aus Polyethylenterephthalat (PET) oder aus Polypropylen (PP). Die Verschleißschicht 17 besteht aus Polyethylenterephthalat (PET) oder aus Polypropylen (PP). Die Verschleißschicht 17 besitzt eine Dicke D_{V} von 0,2 mm bis 0,75 mm, insbesondere von 0,30 mm bis 0,65 mm.

Die Dekorschicht 16 und die Verschleißschicht 17 sind zu einer Einheit verklebt bzw. kaschiert und oberseitig mit einer Versiegelung 18 in Form einer Lackschicht aus Polyurethan basiertem Lack versehen. Die Versiegelung 18 weist eine Dicke D_{L} von 0,2 µm bis 12,0 µm, insbesondere von 5,0 µm bis 10,0 µm auf. Die transparente Versiegelung 18 verleiht dem Fußbodenelement 1 die gewünschte Haptik und den gewünschten Glanzgrad. Ebenso sind durch die Versiegelung 18 Matt/Glanz-Effekte oder auf das Dekorbild abgestimmte Matt/Glanz-Abstufungen einstellbar.

Zur Verbesserung der Haftung sind die Verschleißschicht 17 und insbesondere die Dekorschicht 16 unterseitig mit einer Haftfläche 19 versehen. Die Haftfläche 19 ist vorzugsweise durch eine Coronabehandlung oder eine Plasmabehandlung der Unterseite 20 der Dekorschicht 16 bzw. der Unterseite 21 der Verschleißschicht 17 erzeugt.

Das Fußbodenpaneel 2, wie in der Figur 2 dargestellt, entspricht vom grundsätzlichen Aufbau dem Fußbodenelement 1 gemäß der Darstellung der Figur 1 und der vorgenommenen Beschreibungen. Demzufolge ist die Figur 2 mit den gleichen Bezugszeichen versehen. Oberseitig ist das Fußbodenelement 2 mit einer reliefartigen Oberflächenstruktur 22 versehen, welche in die Sichtseite 23 der Nutzbeschichtung 4 geprägt ist. Vorzugsweise erfolgt die Prägung über Hitze und Druck. Über die Oberflächenstruktur 22 kann die Optik, insbesondere der Glanzgrad, des Fußbodenelements 2 bestimmt werden. Die Oberflächenstruktur 22 ist großer als (>) 80 µm tief, so dass zumindest die Versiegelung 18, die Verschleißschicht 17 und die Dekorschicht 16 strukturiert sind.

Besonders vorteilhaft ist das optische Erscheinungsbild eines Fußbodenelements 2, wenn die Oberflächenstruktur 22 synchron auf das Dekorbild der Dekorschicht 16, insbesondere ein Druckdekorbild, abgestimmt ist. Insbesondere Oberflächenstruktur 22 und unterschiedliche Glanzgradausprägungen ergeben sehr realistische Oberflächen.

Die Längskanten 24, 25 an den Längsseiten 7, 8 ebenso wie die Kopfkanten an den hier nicht dargestellten Kopfseiten der Fußbodenelemente 1, 2 sind mit einer Fase 26 versehen. Die Fase 26 ist an der Dekorschicht 16 sowie an der Verschleißschicht 17 und der Versiegelung 18 ausgebildet.

### Bezugszeichen:

- 1 -: Fußbodenelement
- 2 -: Fußbodenelement
- 3 -: Trägerplatte
- 4 -: Nutzbeschichtung
- 5 -: Gegenzug
- 6 -: Unterseite v. 3
- 7 -: Längsseite
- 8 -: Längsseite
- 9 -: Feder
- 10 -: Nut
- 11 -: Koppelmittel
- 12 -: Rastzunge
- 13 -: Rastnuten
- 14 -: Oberseite
- 15 -: Dämpfungsschicht
- 16 -: Dekorschicht
- 17 -: Verschleißschicht
- 18 -: Versiegelung
- 19 -: Haftfläche
- 20 -: Unterseite v. 16
- 21 -: Unterseite v. 17
- 22 -: Oberflächenstruktur
- 23 -: Sichtseite
- 24 -: Längskante
- 25 -: Längskante
- 26 -: Fase
- Dp -: Dicke v. 15
- D_{G} -: Dicke v. 5
- D_{V} -: Dicke v. 17
- D_{L} -: Dicke v. 18
- D_{T} -: Dicke v. 3

## Patentansprüche

1. Fußbodenelement, welches eine Trägerplatte (3) mit einer oberseitigen, mehrlagigen Nutzbeschichtung (4) aufweist, wobei die Trägerplatte (3) aus verdichtetem Fasermaterial besteht, insbesondere aus hochverdichtetem Fasermaterial (HDF) und eine Dicke (D_{T}) von 5,0 mm bis 8,0 mm besitzt und wobei an den Längsseiten (7, 8) und an den Kopfseiten der Trägerplatte (3) Koppelmittel (11) vorgesehen sind, welche bei in einem Fußbodenbelag benachbarten Fußbodenelementen (1, 2) miteinander in Eingriff gelangen sowie unterseitig der Trägerplatte (3) ein Gegenzug (5) vorgesehen ist, **dadurch gekennzeichnet, dass** die Nutzbeschichtung (4) eine Dämpfungsschicht (15), eine Dekorschicht (16) sowie eine Verschleißschicht (17) umfasst, wobei die Verschleißschicht (17) aus einem thermoplastischen Kunststoff auf Basis von Polyethylenterephthalat (PET) und/oder Polypropylen (PP) besteht und die Dekorschicht (16) eine bedruckte Folie ist, welche aus einem thermoplastischen Kunststoff auf Basis von Polyethylenterephthalat (PET) und/oder Polypropylen (PP) besteht und auf die Verschleißschicht (17) eine Versiegelung (18) aufgetragen ist und die Dämpfungsschicht (15) eine Dicke (D_{D}) von 0,8 mm bis 3,5 mm besitzt sowie die Dämpfungsschicht (15) eine Dichte von größer oder gleich (≥) 400 kg/m³ besitzt und der Gegenzug (5) eine Dicke (D_{G}) von 0,4 mm bis 3,0 mm besitzt sowie der Gegenzug (5) eine Dichte von größer oder gleich (≥) 200 kg/m³ besitzt.

2. Fußbodenelement nach Anspruch 1, **dadurch gekennzeichnet, dass** die Dekorschicht (16) auf der Unterseite (21) der Verschleißschicht (17) aufgetragen ist.

3. Fußbodenelement nach Anspruch 1 oder 2, **dadurch gekennzeichnet, dass** die Dämpfungsschicht (15) aus einem Naturmaterial, insbesondere einem hochverdichtetem Granulatwerkstoff, vorzugsweise Kork, besteht.

4. Fußbodenelement nach Anspruch 3, **dadurch gekennzeichnet, dass** die Dämpfungsschicht (15) und der Gegenzug (5) aus dem gleichen Werkstoff bestehen.

5. Fußbodenelement nach wenigstens einem der Ansprüche 1 bis 4, **dadurch gekennzeichnet, dass** die Versiegelung (18) durch eine Lackierung, insbesondere eine Lackierung auf Polyurethan(PUR)-Basis, gebildet ist und vorzugsweise eine Dicke D_{L} von 2,0 µm bis 12,0 µm, insbesondere von 5,0 µm bis 10,0 µm, aufweist.

6. Fußbodenelement nach wenigstens einem der Ansprüche 1 bis 5, **dadurch gekennzeichnet, dass** die Verschleißschicht (17) und/oder die Dekorschicht (16) unterseitig eine Haftfläche (19) besitzt.

7. Fußbodenelement nach wenigstens einem der Ansprüche 1 bis 6, **dadurch gekennzeichnet, dass** die Verschleißschicht (17) eine Dicke D_{V} von 0,20 mm bis 0,75 mm, insbesondere von 0,30 mm bis 0,65 mm, besitzt.

8. Fußbodenelement nach wenigstens einem der Ansprüche 1 bis 7, **dadurch gekennzeichnet, dass** die Dämpfungsschicht (15) eine Dicke D_{D} von 1,0 mm bis 3,0 mm besitzt.

9. Fußbodenelement nach wenigstens einem der Ansprüche 1 bis 8, **dadurch gekennzeichnet, dass** der Gegenzug (5) eine Dicke D_{G} von 0,6 mm bis 2,5 mm besitzt.

10. Fußbodenelement nach wenigstens einem der Ansprüche 1 bis 9, **dadurch gekennzeichnet, dass** die Trägerplatte (3) aus einem imprägnierten Werkstoff besteht.

11. Fußbodenelement nach wenigstens einem der Ansprüche 1 bis 10, **dadurch gekennzeichnet, dass** die Längskanten (24, 25) und/oder die Kopfkanten eine Fase (26) aufweisen, wobei die Fase (26) vorzugsweise an der Dekorschicht (16) und/oder der Verschleißschicht (17) und/oder der Versiegelung (18) ausgebildet ist.

12. Fußbodenelement nach wenigstens einem der Ansprüche 1 bis 11, **dadurch gekennzeichnet, dass** die Sichtseite (23) eine geprägte Oberflächenstruktur (22) besitzt.

13. Fußbodenelement nach Anspruch 12, **dadurch gekennzeichnet, dass** die Oberflächenstruktur (22) synchron auf das Dekorbild der Dekorschicht (16) abgestimmt ist.

## Claims

1. Flooring element which features a supporting plate (3) with a multilayer coating (4) on the upper side, wherein the supporting plate (3) consists of compressed fibre material, in particular high-density fibreboard (HDF) and has a thickness (D_{T}) of between 5.0 mm and 8.0 mm and wherein couplants (11) are provided on the long sides (7, 8) and on the ends of the supporting board (3) which come into contact with flooring elements (1, 2) in an adjacent floor covering and a counter-traction element (5) is provided on the underside of the supporting plate (3), **characterised in that** the coating (4) comprises a damping layer (15), a decorative layer (16) and a wear layer (17), wherein the wear layer (17) is made from a thermoplastic synthetic material based on polyethylene terephthalate (PET) and/or polypropylene (PP) and the decorative layer (16) is a printed film which is made from a thermoplastic synthetic material based on polyethylene terephthalate (PET) and/or polypropylene (PP) and a seal (18) is applied onto the wear layer (17) and the damping layer (15) has a thickness (D_{D}) of between 0.8 mm and 3.5 mm and the damping layer (15) has a density of or over (≥) 400 kg/m³ and the counter-traction element (5) has a thickness (D_{G}) of between 0.4 mm and 3.0 mm and the counter-traction element (5) has a density of or over (≥) 200 kg/m³.

2. Flooring element according to claim 1, **characterised in that** the decorative layer (16) is applied on the underside (21) of the wear layer (17).

3. Flooring element according to claim 1 or 2, **characterised in that** the damping layer (15) is made from a natural material, in particular a high-density granulated material, preferably cork.

4. Flooring element according to claim 3, **characterised in that** the damping layer (15) and the counter-traction element (5) are made from the same material.

5. Flooring element according to at least one of claims 1 to 4, **characterised in that** the seal (18) is formed by a lacquering, in particular a polyurethane (PUR)-based lacquering and preferably has a thickness D_{L} of between 2.0 µm and 12.0 µm, in particular between 5.0 µm and 10.0 µm.

6. Flooring element according to at least one of claims 1 to 5, **characterised in that** the wear layer (17) and/or the decorative layer (16) have a bonding surface (19) on the underside.

7. Flooring element according to at least one of claims 1 to 6, **characterised in that** the wear layer (17) has a thickness D_{V} of between 0.2 mm and 0.75 mm, in particular between 0.3 mm and 0.65 mm.

8. Flooring element according to at least one of claims 1 to 7, **characterised in that** the damping layer (15) has a thickness Door between 1.0 mm and 3.0 mm.

9. Flooring element according to at least one of claims 1 to 8, **characterised in that** the counter-traction element (5) has a thickness D_{G} of between 0.6 mm and 2.5 mm.

10. Flooring element according to at least one of claims 1 to 9, **characterised in that** the support plate (3) is formed from an impregnated material.

11. Flooring element according to at least one of claims 1 to 10, **characterised in that** the long edges (24, 25) and/or the end edges have a bevel (26), wherein the bevel (26) is preferably formed on the decorative layer (16) and/or the wear layer (17) and/or the seal (18).

12. Flooring element according to at least one of claims 1 to 11, **characterised in that** the visible side (23) has an embossed surface structure (22).

13. Flooring element according to claim 12, **characterised in that** the surface structure (22) is synchronously coordinated with the decorative design of the decorative layer (16).

## Revendications

1. Élément de sol, qui comporte une plaque de support (3) avec un revêtement utile (4) à plusieurs couches sur le dessus, la plaque de support (3) étant constituée d'un matériau de fibres densifié, notamment d'un matériau de fibres à haute densité (HDF), et ayant une épaisseur (D_{T}) de 5,0 mm à 8,0 mm et des moyens d'assemblage (11) étant prévus sur les côtés longs (7, 8) et sur les côtés frontaux de la plaque de support (3), lesquels moyens d'assemblage viennent en prise les uns avec les autres lorsque les éléments de sol (1, 2) sont voisins dans un revêtement de sol, un contrebalancement (5) étant prévu sur le dessous de la plaque de support (3), **caractérisé en ce que** le revêtement utile (4) comprend une couche d'amortissement (15), une couche décorative (16) ainsi qu'une couche d'usure (17), la couche d'usure (17) étant en un thermoplastique à base de polytéréphtalate d'éthylène (PET) et/ou de polypropylène (PP) et la couche décorative (16) étant une feuille imprimée qui est constituée d'un thermoplastique à base de polytéréphtalate d'éthylène (PET) et/ou de polypropylène (PP) et un vitrifiant (18) étant appliqué sur la couche d'usure (17) et la couche d'amortissement (15) ayant une épaisseur (D_{D}) de 0,8 mm à 3,5 mm et la couche d'amortissement (15) ayant une densité supérieure ou égale à (≥) 400 kg/m³ et le contrebalancement (5) ayant une épaisseur (D_{G}) de 0,4 mm à 3,0 mm et le contrebalancement (5) ayant une densité supérieure ou égale à (≥) 200 kg/m³.

2. Élément de sol selon la revendication 1, **caractérisé en ce que** la couche décorative (16) est appliquée sur le dessous (21) de la couche d'usure (17).

3. Élément de sol selon la revendication 1 ou 2, **caractérisé en ce que** la couche d'amortissement (15) est en un matériau naturel, notamment un matériau granulé à haute densité, de préférence du liège.

4. Élément de sol selon la revendication 3, **caractérisé en ce que** la couche d'amortissement (15) et le contrebalancement (5) sont constitués du même matériau.

5. Élément de sol selon au moins l'une des revendications 1 à 4, **caractérisé en ce que** le vitrifiant (18) est formé par un vernis, notamment un vernis à base de polyuréthane (PUR), et a de préférence une épaisseur D_{L} de 2,0 µm à 12,0 µm, notamment de 5,0 µm à 10,0 µm.

6. Élément de sol selon au moins l'une des revendications 1 à 5, **caractérisé en ce que** la couche d'usure (17) et/ou la couche décorative (16) ont sur leur dessous une surface adhésive (19).

7. Élément de sol selon au moins l'une des revendications 1 à 6, **caractérisé en ce que** la couche d'usure (17) a une épaisseur D_{V} de 0,20 mm à 0,75 mm, notamment de 0,30 mm à 0,65 mm.

8. Élément de sol selon au moins l'une des revendications 1 à 7, **caractérisé en ce que** la couche d'amortissement (15) a une épaisseur D_{D} de 1,0 mm à 3,0 mm.

9. Élément de sol selon au moins l'une des revendications 1 à 8, **caractérisé en ce que** le contrebalancement (5) a une épaisseur De de 0,6 mm à 2,5 mm.

10. Élément de sol selon au moins l'une des revendications 1 à 9, **caractérisé en ce que** la couche de support (3) est constituée d'un matériau imprégné.

11. Élément de sol selon au moins l'une des revendications 1 à 10, **caractérisé en ce que** les arêtes longitudinales (24, 25) et/ou les arêtes frontales ont un biseau (26), le biseau (26) étant conçu de préférence sur la couche décorative (16) et/ou sur la couche d'usure (17) et/ou sur le vitrifiant (18).

12. Élément de sol selon au moins l'une des revendications 1 à 11, **caractérisé en ce que** le côté visible (23) a une structure de surface (22) estampée.

13. Élément de sol selon la revendication 12, **caractérisé en ce que** la structure de surface (22) est accordée de manière synchrone à l'image décorative de la couche décorative (16).
